# DEMANDE DE BREVET EUROPEEN

(11) **EP 2 190 211 A1**
(43) Date de publication de la demande: **26.05.2010**
(21) Numéro de dépôt: 09174282.5
(22) Date de dépôt: 28.10.2009
(51) Int. Cl.: H04Q 1/02, H01H 19/00

(54) **Dispositif modulaire de raccordement à double configuration**

(30) Priorité: 25.11.2008 FR 0857988
(71) Demandeur: Legrand France, 87000 Limoges (FR); Legrand SNC, 87000 Limoges (FR)
(72) Inventeur: Guitard, Julien, 38160 Saint Marcellin (FR)
(74) Mandataire: Bentz, Jean-Paul

(57) **Abrégé**

L'invention concerne un dispositif modulaire de raccordement à des ressources de différents types, ce dispositif présentant une structure porteuse (1), une pluralité de modules de brassage (2), et un ensemble d'indicateurs (3) dont chacun renseigne sur le type de ressource auquel est raccordé un module de brassage (2) correspondant.

Selon l'invention, la structure porteuse (1) et chacun des indicateurs (3) sont réversibles par retournement haut-bas, et chaque module (2) comporte un serre-câble directionnel orienté vers une base (12) de la structure (1).

## Description

L'invention concerne, de façon générale, la conception des coffrets, armoires, et autres dispositifs de connexion.

Plus précisément, l'invention concerne un dispositif modulaire de raccordement à des ressources de différents types, ce dispositif présentant une structure porteuse dotée de plusieurs faces, une pluralité de modules de brassage conçus pour, lors de leur utilisation, être disposés sur une face avant de la structure, être juxtaposés suivant une direction d'alignement horizontale, et être raccordés chacun par un câble à l'une des ressources, et un ensemble d'indicateurs dont chacun renseigne sur le type de ressource auquel est raccordé un module de brassage correspondant, la structure étant conformée pour se dresser verticalement, lors de son utilisation, à partir d'une première de ses faces formant base.

Des dispositifs modulaires de ce type sont utilisés dans de nombreuses applications, et prennent notamment la forme d'armoires ou de coffrets de brassage, tels que des coffrets de communication multimédia.

Les dispositifs de ce genre comportent traditionnellement d'une part des prises d'entrée reliées à diverses ressources par des lignes de transmission de signaux telles que des lignes téléphoniques, des câbles de télévision, ou des lignes de réseau informatique local, d'autre part des prises de sortie normalisées, telles que des prises de type RJ45, et enfin des modules de brassage propres à relier une prise de sortie correspondante à une prise d'entrée de l'un des types disponibles.

Dans la mesure où les différents modules de brassage sont ainsi reliés à différents types de ressources, et où la combinatoire qui en résulte est importante, il est crucial, pour toute intervention sur un tel dispositif, de faire en sorte que l'accès à l'information que constitue le schéma des connexions internes de ce dispositif soit relativement aisé.

Cette fonction de repérage est assurée par les indicateurs, dont chacun est affecté à un module de brassage correspondant et renseigne sur le type de ressource auquel est relié ce module.

En dehors de cet aspect de signalétique, qui doit impérativement être pris en compte dans tous les cas, la conception de ces dispositifs doit également surmonter la difficulté que représente la diversité des branchements auxquels ces dispositifs doivent s'adapter, les câbles d'accès aux différentes ressources pouvant notamment être acheminés vers ces dispositifs suivant une direction montante ou suivant une direction descendante.

Dans ce contexte, l'invention a pour but de proposer un dispositif modulaire de raccordement à des ressources de différents types offrant, pour son installation, une plus grande capacité d'adaptation aux différentes situations rencontrées.

A cette fin, le dispositif de l'invention, par ailleurs conforme à la définition générique qu'en donne le préambule ci-dessus, est essentiellement **caractérisé en ce que** la structure porteuse présente, à l'opposé de la première face formant base, une deuxième face formant base et à partir de laquelle la structure peut aussi se dresser verticalement en utilisation, en ce que chaque module comporte un serre-câble directionnel orienté vers la deuxième face formant base, en ce que chaque indicateur comprend une platine portée par le module correspondant, et en ce que la platine de chaque indicateur adopte sélectivement, sur le module correspondant, l'une de deux positions stables possibles dont chacune est obtenue à partir de l'autre par rotation de 180 degrés autour d'un axe horizontal perpendiculaire à la direction d'alignement.

Il est notamment possible de prévoir que chaque module comprenne un boîtier, que la platine de chaque indicateur et le boîtier du module correspondant portent des reliefs d'indexage respectifs coopérant pour déterminer les deux positions stables de la platine sur le boîtier du module, et que la platine de chaque indicateur et le boîtier du module correspondant soient liés l'un à l'autre par une liaison mécanique autorisant un coulissement d'amplitude limitée de la platine par rapport au boîtier suivant l'axe horizontal pour interrompre la coopération des reliefs d'indexage dans une position de coulissement de la platine distante du boîtier, et pour permettre la rotation de la platine par rapport au module correspondant.

La liaison mécanique comprend par exemple un arbre s'étendant suivant ledit axe horizontal et appartenant à la platine ou au boîtier, une lumière respectivement pratiquée dans le boîtier ou la platine, et une butée formée sur l'arbre et interdisant l'extraction de l'arbre hors de la lumière.

Il est également possible de prévoir, notamment dans le cas où l'arbre appartient à la platine et la lumière au boîtier, que la butée prenne la forme d'une collerette portée par l'arbre et présentant au moins deux bords non circulaires à symétrie d'ordre deux, et que les reliefs d'indexage comprennent des nervures portées par le boîtier, s'étendant dans le boîtier de part et d'autre de la lumière, et bloquant les bords non circulaires de la butée en rotation pour toute position de la platine autre que la position distante du boîtier.

Les reliefs d'indexage peuvent comprendre en outre au moins deux pions portés par la platine ou le boîtier et deux orifices respectivement pratiqués dans le boîtier ou la platine, chaque orifice étant dimensionné pour recevoir l'un quelconque des pions et le retenir de façon réversible.

Par ailleurs, l'arbre et / ou la lumière comportent avantageusement des moyens de retenue élastique conçus pour maintenir la platine de façon réversible dans l'une au moins des positions de coulissement par rapport au boîtier du module correspondant.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue partielle en perspective d'un dispositif conforme à l'invention;
- la figure 2 est une vue de face d'un sous-ensemble d'un dispositif conforme à l'invention;
- la figure 3 est une vue partielle en perspective du sous-ensemble illustré à la figure 2, ce sous-ensemble étant observé après un retournement de bas en haut et à plus grande échelle;
- la figure 4 est une vue agrandie en perspective d'un module de brassage et d'un indicateur équipant un dispositif conforme à l'invention, la platine de l'indicateur étant représentée dans une position de coulissement dans laquelle elle est distante du boîtier du module, et le module étant représenté dans la position qu'il adopte dans le sous-ensemble orienté suivant la figure 2;
- la figure 5 est une vue en coupe partielle du module de brassage et de l'indicateur tels qu'illustrés à la figure 4;
- la figure 6 est une vue en coupe du module de brassage illustré à la figure 5, la coupe étant réalisée suivant un plan repéré par les flèches VI-VI de la figure 5;
- la figure 7 est une vue en perspective à échelle réduite du module de brassage et de l'indicateur illustrés à la figure 4, à la différence que la platine de l'indicateur est représentée dans une position de coulissement dans laquelle elle est accolée au boîtier du module, et que le module est représenté dans la position qu'il adopte dans le sous-ensemble orienté suivant la figure 3;
- la figure 8 est une vue en perspective du module de brassage et de l'indicateur illustrés à la figure 7, la platine de l'indicateur étant représentée en cours de retournement par rapport au boîtier du module; et
- la figure 9 est une vue en perspective du module de brassage et de l'indicateur illustrés à la figure 7, la platine de l'indicateur étant représentée après l'opération de retournement illustrée à la figure 8.

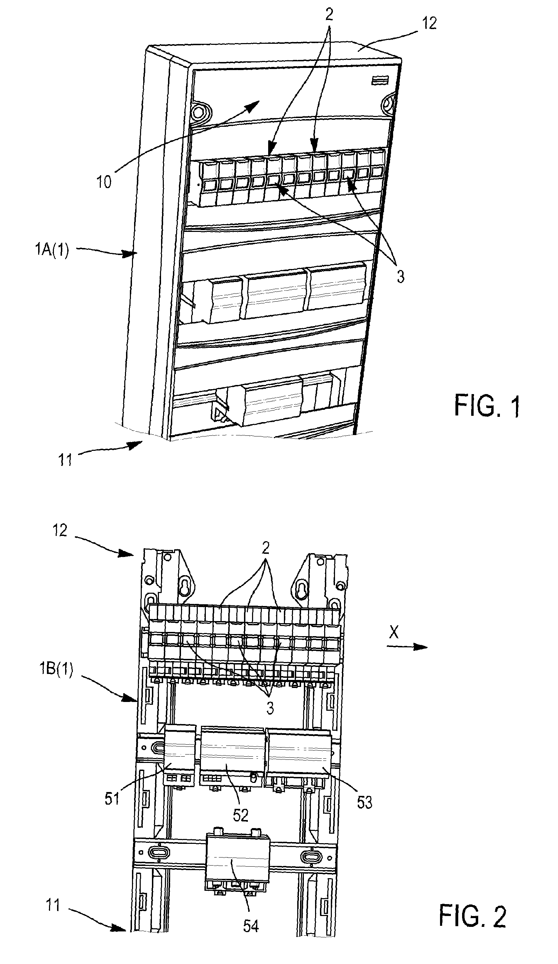

Comme annoncé précédemment, l'invention concerne un dispositif modulaire de raccordement (figures 1 et 2) présentant notamment une structure porteuse 1, une pluralité de modules de brassage 2, et un ensemble d'indicateurs 3.

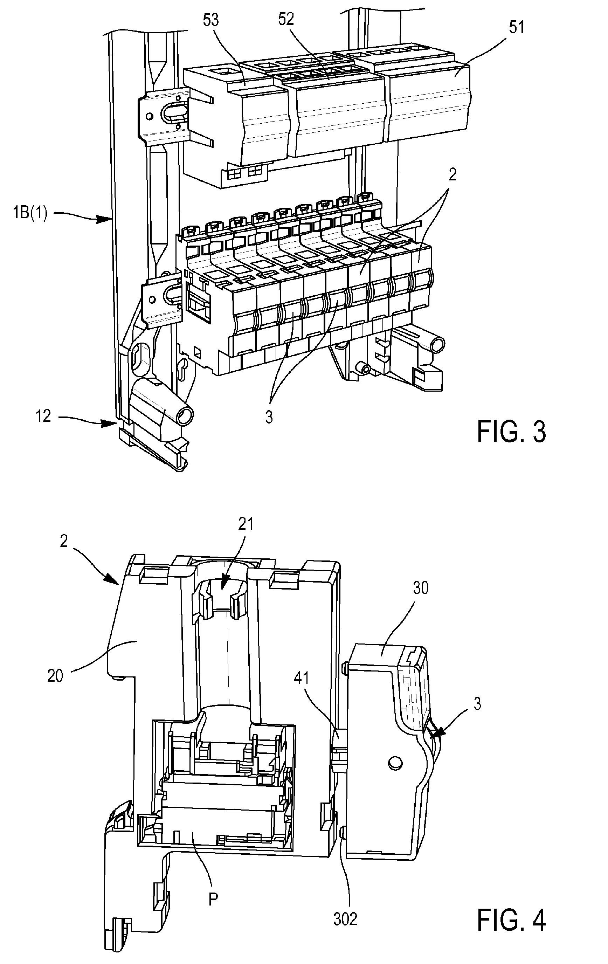

Le dispositif illustré aux figures à titre d'exemple non limitatif constitue un coffret de communication multimédia et comprend en outre des prises P de type RJ45 (figure 4) ainsi que divers blocs fonctionnels tels que 51, 52, 53 et 54, dédiés à différents média, tels que la téléphonie, la télévision ou un réseau informatique local, représentant autant de types différents de ressources disponibles.

Les modules de brassage 2, dont chacun est d'une part relié à une prise RJ45 correspondante et d'autre part relié par un câble à l'un des blocs fonctionnels 51 à 54, sont disposés sur la face avant 10 de la structure 1 et juxtaposés suivant une direction d'alignement horizontale X.

Chaque indicateur 3 se rapporte à un module de brassage 2 correspondant et a pour fonction de renseigner sur le type de ressource auquel est raccordé ce module de brassage.

La structure porteuse 1, qui comprend généralement une enveloppe externe 1A (figure 1) et un cadre interne 1B (figure 2), est conçue pour être utilisée dans une position dans laquelle elle se dresse verticalement à partir d'une base qui est formée par l'une de ses faces, telle que la face 11.

Dans la mesure où d'une part la structure porteuse 1 peut aussi bien être posée qu'accrochée, et où d'autre part la constitution de la structure porteuse 1 peut prendre des formes très diverses, les termes de "base" et de "face" sont pris ici dans un sens très large, la "base" désignant simplement la partie de la structure qui est la plus basse lorsque le dispositif est en cours d'utilisation.

Selon l'invention, la structure porteuse 1 présente, à l'opposé de la face 11 utilisable comme base, une autre face 12 également utilisable comme base, c'est-à-dire à partir de laquelle la structure porteuse 1 peut aussi se dresser verticalement en utilisation.

En d'autres termes, la structure porteuse 1 est fonctionnellement réversible par inversion de sa partie haute et de sa partie basse.

Comme le montre la figure 4, chaque module 2 comporte un serre-câble directionnel 21.

De préférence, la rangée de modules 2 est disposée à plus grande proximité d'une des deux faces de la structure 1 formant une base que de la face opposée, en l'occurrence à plus grande proximité de la face 12 que de la face 11, et le serre-câble 21 de chaque module 2 est orienté vers celle des faces formant bases qui est la plus proche.

Par ailleurs, chaque indicateur 3 comprend une platine 30 qui est portée par le module correspondant 2, et qui est elle aussi fonctionnellement réversible par retournement à 180 degrés.

Plus précisément, la platine 30 de chaque indicateur 3 peut adopter à volonté, sur le module correspondant 2, l'une ou l'autre de deux positions stables dont chacune est obtenue à partir de l'autre par rotation de 180 degrés autour d'un axe horizontal Y perpendiculaire à la direction d'alignement X.

Cet agencement a pour effet d'une part que les câbles connectés aux différents modules peuvent être indifféremment acheminés vers la structure 1 en y parvenant par le haut ou par le bas, d'autre part que les câbles peuvent ne courir que sur une distance courte et être de toute façon bien maintenus, et enfin que les informations portées par les différents indicateurs 3 restent immédiatement lisibles dans les deux modes d'installation possibles du dispositif.

Chaque module 2 comprend par exemple un boîtier 20, ce boîtier et la platine 30 de chaque indicateur 3 correspondant portant des reliefs d'indexage respectifs tels que 201, 202 pour le boîtier, et 301, 302 pour la platine.

Ces reliefs d'indexage, qui seront plus précisément décrits ultérieurement en référence au mode de réalisation particulier illustré, coopèrent à volonté pour interdire la rotation de la platine 30 autour d'un axe horizontal Y, et pour définir ainsi chacune des deux positions stables que la platine 30 peut adopter par rapport au boîtier 20 du module 2 correspondant.

La platine 30 de chaque indicateur 3 et le boîtier 20 du module correspondant 2 sont par ailleurs liés l'un à l'autre par une liaison mécanique, telle que celle que réalisent les éléments 41 à 44 détaillés ci-après, et qui autorise un coulissement de la platine 30 par rapport au boîtier 20, ce coulissement étant orienté suivant l'axe horizontal Y et d'amplitude limitée.

Cette liaison mécanique comprend par exemple un arbre 41 s'étendant suivant l'axe horizontal Y, une lumière 42 dans laquelle l'arbre 41 est introduit, et une butée 43 formée sur l'arbre 41 et interdisant l'extraction de l'arbre 41 hors de la lumière 42.

Bien que l'arbre 41 puisse appartenir au boîtier 20 et que la lumière 42 puisse être pratiquée dans la platine 30, le mode de réalisation illustré correspond à l'agencement inverse, dans lequel l'arbre 41 appartient à la platine 30 et dans lequel la lumière 42 est pratiquée dans le boîtier 20.

Cette liaison mécanique assure une double fonction.

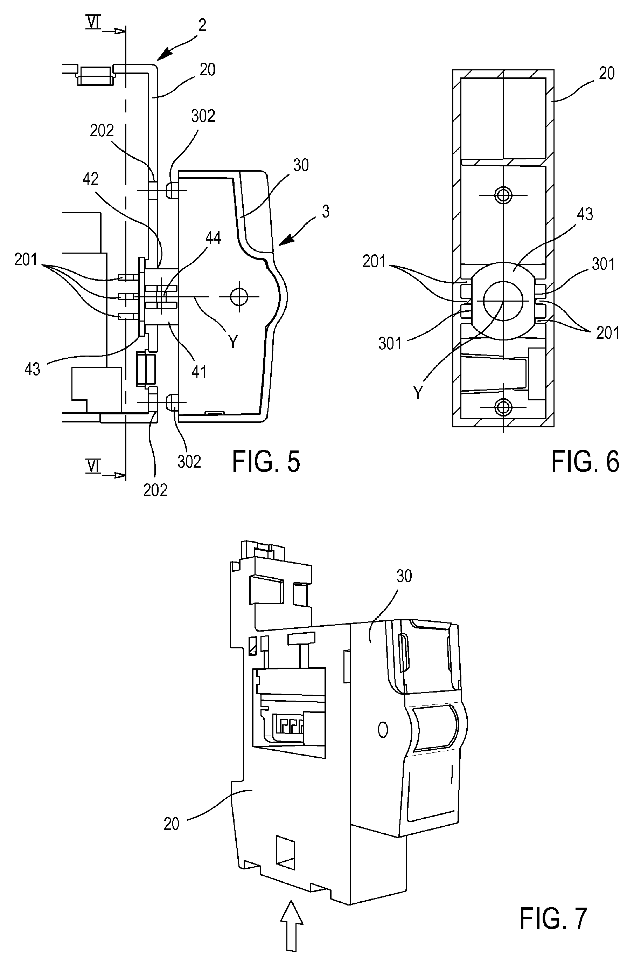

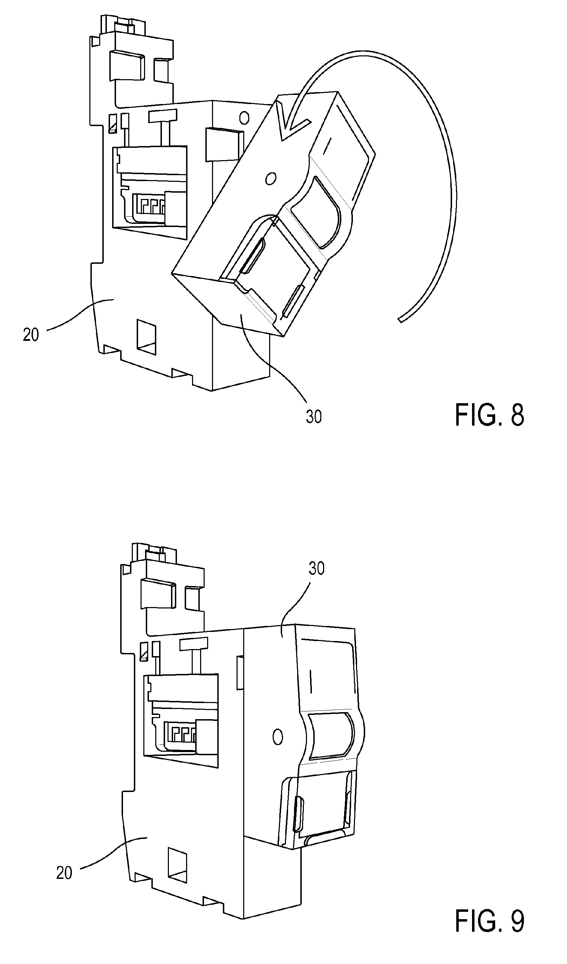

La première fonction de cette liaison est de permettre à la platine 30 d'être, à volonté, plaquée contre le boîtier 20 comme le montrent par exemple les figures 3, 7 et 9, ou d'être éloignée de ce boîtier, comme le montrent les figures 4 et 5.

La deuxième fonction de cette liaison mécanique est d'une part de permettre, dans la position plaquée de la platine 30 telle qu'illustrée aux figures 3, 7 et 9, la coopération des reliefs d'indexage 201, 202 et 301, 302 pour interdire la rotation de la platine 30 par rapport au boîtier 20 du module correspondant, et d'autre part, dans la position distante de la platine telle qu'illustrée aux figures 4 et 5, d'interrompre la coopération des reliefs d'indexage 201, 202 et 301, 302, pour permettre la rotation de la platine 30 par rapport au boîtier 20 du module correspondant 2.

Pour ce faire, la butée 43 prend par exemple la forme d'une collerette portée par l'arbre 41 et présentant au moins deux bords non circulaires 301 à symétrie d'ordre deux.

On entend ici par "symétrie d'ordre deux" la symétrie qui permet à chacun des bords 301 de prendre la place de l'autre bord 301 après une rotation de la platine 30, et donc de la collerette formant la butée 43, de 180 degrés (soit 360°/2) autour de l'axe Y.

Les reliefs d'indexage comprennent par ailleurs des nervures 201 qui sont portées par le boîtier 20, qui s'étendent dans le boîtier 20 de part et d'autre de la lumière 42, et qui bloquent les bords non circulaires 301 de la butée 43 en rotation pour toute position de la platine 30 autre que la position distante illustrée aux figures 4 et 5.

De préférence, les reliefs d'indexage comprennent aussi deux pions 302 et deux orifices 202, chaque orifice 202 étant dimensionné pour recevoir l'un quelconque des pions 302 et le retenir de façon réversible.

Bien que l'un des pions ou les deux puissent être portés par le boîtier 20 et que l'un des orifices ou les deux puissent être pratiqués dans la platine 30, le mode de réalisation illustré correspond à l'agencement dans lequel les deux pions 302 sont portés par la platine 30 tandis que les deux orifices 202 sont pratiqués dans le boîtier 20.

Des moyens de retenue élastique 44 peuvent aussi être prévus pour maintenir la platine 30 de façon réversible soit dans sa position plaquée sur le boîtier 20 comme illustré aux figures 3, 7 et 9, soit dans sa position éloignée de ce boîtier, comme le montrent les figures 4 et 5.

Dans le mode de réalisation illustré, ces moyens 44 sont constitués par une surépaisseur locale de l'arbre 41 qui s'escamote élastiquement lors de son passage à travers la lumière 42.

## Revendications

1. Dispositif modulaire de raccordement à des ressources de différents types, ce dispositif présentant une structure porteuse (1) dotée de plusieurs faces (10-12), une pluralité de modules de brassage (2) conçus pour, lors de leur utilisation, être disposés sur une face avant (10) de la structure (1), être juxtaposés suivant une direction d'alignement horizontale (X), et être raccordés chacun par un câble à l'une des ressources, et un ensemble d'indicateurs (3) dont chacun renseigne sur le type de ressource auquel est raccordé un module de brassage (2) correspondant, la structure (1) étant conformée pour se dresser verticalement, lors de son utilisation, à partir d'une première (11) de ses faces formant base, **caractérisé en ce que** la structure porteuse (1) présente, à l'opposé de la première face (11) formant base, une deuxième face (12) formant base et à partir de laquelle la structure (1) peut aussi se dresser verticalement en utilisation, **en ce que** chaque module (2) comporte un serre-câble directionnel (21) orienté vers la deuxième face (12) formant base, **en ce que** chaque indicateur (3) comprend une platine (30) portée par le module correspondant (2), et **en ce que** la platine (30) de chaque indicateur (3) adopte sélectivement, sur le module correspondant (2), l'une de deux positions stables possibles dont chacune est obtenue à partir de l'autre par rotation de 180 degrés autour d'un axe horizontal (Y) perpendiculaire à la direction d'alignement (X) .

2. Dispositif modulaire suivant la revendication 1, **caractérisé en ce que** chaque module (2) comprend un boîtier (20), **en ce que** la platine (30) de chaque indicateur (3) et le boîtier (20) du module (2) correspondant portent des reliefs d'indexage respectifs (201, 202; 301, 302) coopérant pour déterminer les deux positions stables de la platine (30) sur le boîtier (20) du module (2), et **en ce que** la platine (30) de chaque indicateur (3) et le boîtier (20) du module correspondant (2) sont liés l'un à l'autre par une liaison mécanique (41-44) autorisant un coulissement d'amplitude limitée de la platine (30) par rapport au boîtier (20) suivant l'axe horizontal (Y) pour interrompre la coopération des reliefs d'indexage (201, 202; 301, 302) dans une position de coulissement de la platine (30) distante du boîtier (20), et pour permettre la rotation de la platine (30) par rapport au module correspondant (2).

3. Dispositif modulaire suivant la revendication 2, **caractérisé en ce que** ladite liaison mécanique comprend un arbre (41) s'étendant suivant ledit axe horizontal (Y) et appartenant à la platine (30) ou au boîtier (20), une lumière (42) respectivement pratiquée dans le boîtier (20) ou la platine (30), et une butée (43) formée sur l'arbre (41) et interdisant l'extraction de l'arbre (41) hors de la lumière (42).

4. Dispositif modulaire suivant la revendication 3, **caractérisé en ce que** l'arbre (41) appartient à la platine (30) et la lumière (42) au boîtier (20), **en ce que** la butée (43) prend la forme d'une collerette portée par l'arbre et présentant au moins deux bords non circulaires (301) à symétrie d'ordre deux, et **en ce que** lesdits reliefs d'indexage (201, 202; 301, 302) comprennent des nervures (201) portées par le boîtier (20), s'étendant dans le boîtier (20) de part et d'autre de la lumière (42), et bloquant les bords non circulaires (301) de la butée (43) en rotation pour toute position de la platine (30) autre que la position distante du boîtier (20).

5. Dispositif modulaire suivant l'une quelconque des revendications précédentes combinée à la revendication 2, **caractérisé en ce que** lesdits reliefs d'indexage (201, 202; 301, 302) comprennent en outre au moins deux pions (302) portés par la platine (30) ou le boîtier (20) et deux orifices (202) respectivement pratiqués dans le boîtier (20) ou la platine (30), chaque orifice (202) étant dimensionné pour recevoir l'un quelconque des pions (302) et le retenir de façon réversible.

6. Dispositif modulaire suivant l'une quelconque des revendications précédentes combinée à la revendication 3, **caractérisé en ce que** l'arbre (41) et / ou la lumière (42) comportent des moyens de retenue élastique (44) conçus pour maintenir la platine (30) de façon réversible dans l'une au moins des positions de coulissement par rapport au boîtier (20) du module (2) correspondant.
